(19) Europäisches Patentamt
European Patent Office
Office européen des brevets

(11) EP 4 675 752 A1

(12) EUROPEAN PATENT APPLICATION

(43) Date of publication:
07.01.2026 Bulletin 2026/02

(21) Application number: 25181045.3

(22) Date of filing: 05.06.2025

(51) International Patent Classification (IPC):
H01M 10/42 (2006.01)    H01M 10/48 (2006.01)

(52) Cooperative Patent Classification (CPC):
H01M 10/4285; H01M 10/486; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.07.2024 TW 113124940

(71) Applicant: Prologium Technology Co., Ltd.
Taoyuan City 32023 (TW)

(72) Inventors:
• CHIEN, SHENG-WEI
320023 Taoyuan City (TW)
• CHANG, MING-HUI
320023 Taoyuan City (TW)

(74) Representative: Wang, Bo
Panovision IP
Ebersberger Straße 3
85570 Markt Schwaben (DE)

(54) **METHOD AND SYSTEM FOR CALCULATING HEAT GENERATION OF BATTERY DISCHARGING/CHARGING**

(57) A method for calculating heat generation of battery discharging/charging includes the following steps: configuring a battery in a heat insulation component; discharging/charging the battery and measuring the temperature during the discharging/charging of the battery to obtain a measured temperature curve; obtaining an Nth-degree curve fitting equation of temperature-time gradient to temperature by curve fitting a cooling phase of the measured temperature curve; substituting the temperatures of the measured temperature curve into the Nth-degree curve fitting equation to obtain temperature compensation values and forming a compensated temperature curve according to the temperatures and the corresponding temperature compensation values; and, calculating the heat generation value of the battery according to the compensated temperature curve and a thermal conversion model of battery discharging/charging. The method is capable of obtaining the temperature curve of battery discharging/charging in a nearly adiabatic condition, to precisely calculate the heat generation value of battery discharging/charging.

S20
configuring the battery in the heat insulation device

S22
discharging/charging battery, allowing a battery temperature of the battery to equilibrate to a first temperature, measuring the temperature of the battery during and after discharging/charging by the temperature measuring device to obtain a measured temperature curve

S24
according to a cooling phase of the measured temperature curve, curve fitting a Nth-degree curve fitting equation of the temperature-time gradient with respect to temperature

S26
substituting a plurality of temperatures of the measured temperature curve into the Nth-degree curve fitting equation to obtain a plurality of temperature compensation values, and generating a compensated temperature curve according to the temperatures and temperature compensation values

S28
calculating the heat generation value of the battery during discharging/charging according to the compensated temperature curve and a battery thermal conversion model

FIG. 2

## Description

The present application is based on, and claims priority from, Taiwan application number 113124940, filed on July 03, 2024, the disclosure of which is hereby incorporated by reference herein in its entirety.

## BACKGROUND OF THE INVENTION

### 1. Field of the invention

The present invention relates to a method and a system for calculating heat generation of battery discharging/charging, and more particularly, to a method and a system for calculating the heat generation value of a battery discharging/charging in a nearly adiabatic condition.

### 2. Description of the prior art

In recent years, the rapid development of smart devices such as electric vehicles and smart phones has led to increasingly advanced and complex functions and performance, thereby raising the demands on batteries. Compared to other types of batteries, lithium-ion batteries offer advantages such as high power-to-weight ratio, high energy density, long lifespan, and low self-discharge, making them gradually replace other types of batteries and find widespread application.

However, no matter the aforementioned lithium-ion battery or other types of batteries, they all generate a large amount of heat during charging and discharging, and the higher the battery performance, the more heat it may generate. The internal circuitry and component layout of smart devices are highly dense, or have stringent temperature requirements. The heat generated by batteries during operation would accumulate within the smart device to cause an increase in temperature. Therefore, effective heat dissipation within the device is critical. For example, electric vehicles are powered by multiple batteries connected in series and/or parallel, which are arranged together. During the charging and discharging process of the batteries, each battery generates a large amount of heat, which can also affect other batteries. If the heat dissipation of the battery pack is uneven, it would cause localized temperature increases in the battery pack, leading to damage to some batteries, which in turn affects other batteries to significantly shorten their useful life or even cause thermal runaway and accidents.

Additionally, due to the significant increase in functionality of smart phones or mobile devices in recent years, such as various new applications, improved camera and photography features, faster network capabilities, and built-in AI, these devices require more efficient computing modules, cameras, network modules, and other components to fully execute these functions. The power requirements of these components are significantly higher than those of previous mobile devices, so the batteries must also have high capacity and the ability to charge and discharge quickly. As a result, more heat is generated during battery operation. Therefore, smart phones and mobile devices must also have excellent heat dissipation performance to handle increasingly complex and high-speed intelligent functions.

The heat dissipation performance required by intelligent machines is directly related to the heat generated during battery operation. Therefore, accurately measuring the heat generation value during battery operation is crucial, as it is directly related to the heat dissipation design requirements for intelligent machines. Generally, the heat generated during battery discharging is greater than that during battery charging. Therefore, measuring the heat generated during battery discharging and using this data for the heat dissipation design of smart machine systems can meet the heat dissipation design requirements. The current industry-standard method for measuring the heat generated during battery discharging/charging primarily utilizes an accelerating rate calorimeter (ARC). Unlike vacuum insulation methods, the ARC operates by establishing isothermal conditions between the test object and the surrounding environment to simulate a nearly adiabatic environment. Specifically, an ARC consists of a sample chamber, a heating furnace configured around the sample chamber, and a temperature control system. During the operation, the battery to be tested is placed inside the sample chamber, and when the battery generates heat, the heating furnace can increase the temperature accordingly. The temperature control system controls the temperatures of the heating furnace and the sample chamber to be consistent with the temperature of the battery. In other words, the temperature gradient between the battery and its surroundings is zero. As a result, the battery and its surroundings do not exchange heat (or exchange only minimal heat), thereby simulating a nearly adiabatic environment. Theoretically, in a completely adiabatic environment (where there is no heat exchange or no temperature gradient between the test object and the system), the heat generated by the battery during discharging/charging is equal to the product the mass of the battery, the specific heat capacity of the battery, and the time derivative of the battery temperature (the rate of temperature rise) during discharging/charging. However, in practical applications, it is impossible to establish a completely adiabatic environment, and the aforementioned accelerating rate calorimeter used in the industry is extremely expensive. Additionally, if the battery is placed in a general environment for discharging/charging, the thermal exchange between the battery and its surroundings, including thermal conduction, convection and radiation, significantly affects the battery temperature and cannot be ignored or accurately calculated. It leads to more complex and less accurate calculations of battery heat generation value, causing significant uncertainty and challenges in the system cooling for the systems such as electric vehicles or smart devices that rely on batteries.

Technological breakthroughs and improvements are urgently needed.

In summary, there is an urgent need for a cost-effective method and system capable of accurately measuring the heat generated during battery discharging/-charging.

## SUMMARY OF THE INVENTION

Therefore, the present invention provides a method for calculating heat generation of battery discharging/charging to solve the problems in the prior art.

In an embodiment of the present invention, the method for calculating heat generation of battery discharging/charging comprises the following steps of: configuring a battery in a heat insulation component; discharging/charging the battery, allowing a battery temperature of the battery to equilibrate to a first temperature after the battery discharging/charging, and measuring the battery temperature of the battery during the discharging/charging and the equilibrating to obtain a measured temperature curve; obtaining an Nth-degree curve fitting equation of the temperature-time gradient with respect to temperature by curve fitting a cooling phase of the measured temperature curve, wherein N is an integer greater or equal to 1; substituting a plurality of temperatures of the measured temperature curve into the Nth-degree curve fitting equation to obtain a plurality of temperature compensation values, and forming a compensated temperature curve according to the temperatures and the corresponding temperature compensation values; and, calculating a heat generation value of the discharging/-charging of the battery according to the compensated temperature curve and a battery thermal conversion model.

Wherein, the method for calculating heat generation of battery discharging/charging further comprising the following steps of: setting the time point when the battery starts to discharge/charge at the measured temperature curve as a starting point, and substituting the temperature at the starting point into to the Nth-degree curve fitting equation to obtain a starting temperature compensation value; substituting the temperature at each time point after the starting point of the measured temperature curve to obtain a first temperature compensation value at each time point; adding the temperature compensation value at the $(k-1)^{th}$ time point to the first temperature compensation value at the $k^{th}$ time point to obtain the temperature compensation value corresponding to the $k^{th}$ time point, wherein k is an integer greater or equal to 1; and, adding the temperature at each time point of the measured temperature curve to the corresponding temperature compensation value to obtain a compensated temperature at each time point, and generating the compensated temperature curve according to the compensated temperatures.

Wherein, the battery is discharged/charged at a constant current.

Wherein, the step of configuring a battery in a heat insulation component comprises the following steps of: configuring at least one temperature measuring elements on the surface of the battery; enclosing the battery with the heat insulation component; placing a heavy object on the heat insulation component and at least one heat insulation component; and, placing the heat insulation component in a sealed space.

Wherein, the step of calculating the heat generation value of the discharging/charging of the battery according to the compensated temperature curve and the battery thermal conversion model obtains the heat generation value by multiplying the gradient of the compensated temperature curve of the discharging/charging of the battery by the mass and the specific heat capacity of the battery.

Furthermore, the present invention also provides a system for calculating heat generation of battery discharging/charging, configured to calculating a heat generation value during the discharging/charging of a battery. According to an embodiment, the system for calculating heat generation of battery discharging/charging comprises a heat insulation component, a heavy object, a sealed space, a temperature measuring device and a heat generation value calculating device. The heat insulation component encloses the battery and contacts a top surface and a bottom surface of the battery. The heavy object presses against the heat insulation component. The heat insulation component, battery, and heavy object are placed in the sealed space. The temperature measuring device comprises at least one temperature measuring elements and a temperature sensor. The at least one temperature measuring elements are attached on a surface of the battery. The temperature sensor is connected to the at least one temperature measuring elements, and configured to measure a surface temperature of the battery via the at least one temperature measuring elements. The heat generation value calculating device is connected to the temperature measuring device to receive the surface temperature of the battery measured by the temperature sensor, and configured to form a measured temperature curve according to the received surface temperature of the battery, obtain an Nth-degree curve fitting equation of the temperature-time gradient with respect to temperature by curve fitting a cooling phase of the measured temperature curve, substitute a plurality of temperatures of the measured temperature curve into the Nth-degree curve fitting equation to obtain a plurality of temperature compensation values, form a compensated temperature curve according to the temperatures and the corresponding temperature compensation values and calculating a heat generation value of the discharging/charging of the battery according to the compensated temperature curve and a battery thermal conversion model, wherein N is an integer greater or equal to 1.

Wherein, the heat generation value calculating device is further configured to set the time point when the battery starts to discharge/charge at the measured temperature curve as a starting point, substitute the temperature at the starting point into to the Nth-degree curve fitting equation to obtain a starting temperature compensation value, substitute the temperature at each time point after the starting point of the measured temperature curve to obtain a first temperature compensation value at each time point, add the temperature compensation value at the $(k-1)^{th}$ time point to the first temperature compensation value at the $k^{th}$ time point to obtain the temperature compensation value at the $k^{th}$ time point, add the temperature at each time point of the measured temperature curve to the corresponding temperature compensation value to obtain a compensated temperature at each time point, and generate a compensated temperature curve according to the compensated temperatures, wherein k is an integer greater or equal to 1.

Wherein, the temperature measuring elements of the temperature measuring device are configured at different part of the surface of the battery. The temperature sensor is configured to receive a plurality of measured temperatures from the temperature measuring elements at a time point. The temperature measuring device obtains the surface temperature of the battery by averaging the measured temperatures.

Wherein, the temperature measuring elements are configured at a central line on the surface of the battery.

Wherein, the heat insulation component comprises a top insulation element and a bottom insulation element stacked on each other. The battery is sandwiched between the top insulation element and the bottom insulation element. The heavy object presses against the top insulation element to bring the top insulation element into close contact with the bottom insulation element to enclose the battery.

Wherein, the material of the top insulation element and the bottom insulation element of the heat insulation component is thermal insulation material.

In summary, the method and the system for calculating heat generation of battery discharging/charging of the present invention can compensate for the actual temperature curve measured during battery discharging/charging by a curve fitting equation, thereby forming a compensated temperature curve that is similar to the temperature curve of battery discharging/charging under the nearly adiabatic condition. The compensated temperature curve is then used to calculate the heat generation value during battery discharging/charging. By the method and the system for calculating heat generation of battery discharging/charging of the present invention, not only the heat generation during battery discharging/charging can be accurately calculated, but there is no need to use expensive adiabatic equipment, thereby significantly reducing the cost for measuring the heat generation value of battery discharging/charging.

## BRIEF DESCRIPTION OF THE APPENDED DRAWINGS

FIG. 1 is a schematic diagram illustrating a system for calculating heat generation of battery discharging/charging according to an embodiment of the present invention.

FIG. 2 is a flowchart illustrating a method for calculating heat generation of battery discharging/charging according to an embodiment of the present invention.

FIG. 3 is a flowchart illustrating the method for calculating heat generation of battery discharging/charging according to another embodiment of the present invention.

FIG. 4 is a schematic diagram illustrating the measured temperature curve and the compensated temperature curve obtained by the system and method for calculating heat generation of battery discharging/charging according to an embodiment of the present invention.

FIG. 5 is a schematic diagram illustrating the measured temperature curve and the compensated temperature curve obtained by the system and method for calculating heat generation of battery discharging/charging according to an embodiment of the present invention.

FIG. 6 is a schematic diagram illustrating the compensated temperature curve obtained by the system and method for calculating heat generation of battery discharging/charging according to an embodiment of the present invention, and the temperature curve obtained by measuring the heat generation value of discharging of the battery in the accelerating rate calorimeter for battery thermal runaway test.

## DETAILED DESCRIPTION OF THE INVENTION

For the sake of the advantages, spirits and features of the present invention can be understood more easily and clearly, the detailed descriptions and discussions will be made later by way of the embodiments and with reference of the diagrams. It is worth noting that these embodiments are merely representative embodiments of the present invention, wherein the specific methods, devices, conditions, materials and the like are not limited to the embodiments of the present invention or corresponding embodiments. Moreover, the indefinite articles 'a,' 'an,' and 'one' preceding a device or element in the present invention shall not be construed as limiting the quantity of the device or element. Accordingly, 'a' or 'an' should be interpreted to mean 'one or more,' and references to a device or element in the singular form shall also encompass the plural form, unless the context clearly dictates otherwise.

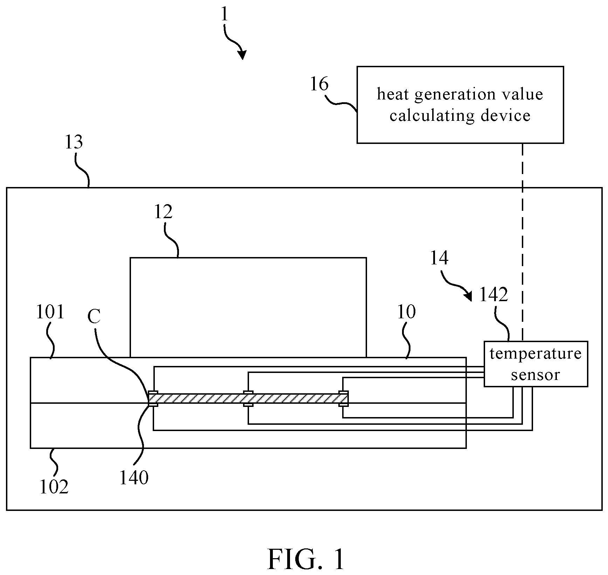

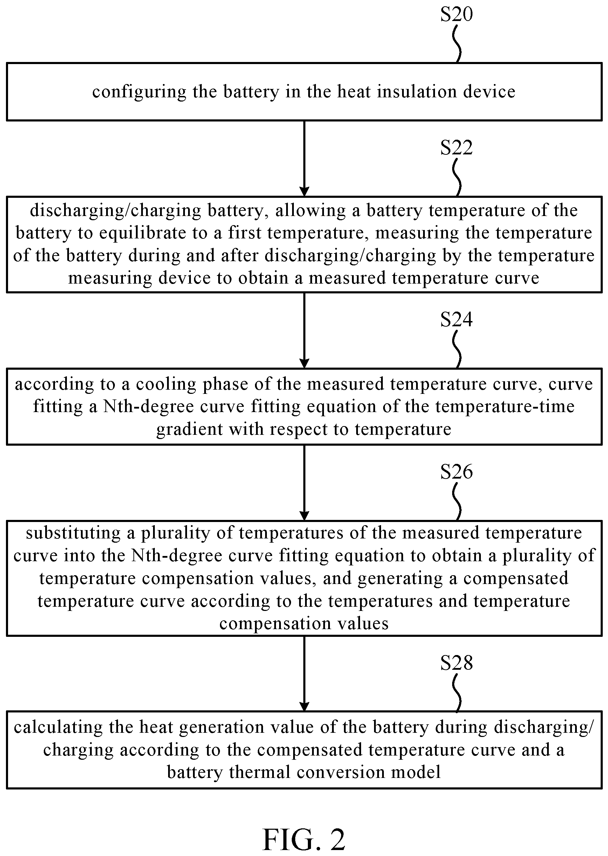

Please refer to FIG. 1 and FIG. 2. FIG. 1 is a schematic diagram illustrating a system 1 for calculating heat generation of battery discharging/charging according to an embodiment of the present invention, and FIG. 2 is a flowchart illustrating a method for calculating heat generation of battery discharging/charging according to an embodiment of the present invention. It should be noted that the method for calculating heat generation of battery discharging/charging in FIG. 2 can be performed by system 1 for calculating heat generation of battery discharging/charging in FIG. 1. Therefore, the method for calculating heat generation of battery discharging/charging will be described using the system 1 for heat generation of battery discharging/charging.

As shown in FIG. 1, in the present embodiment, the system 1 for calculating heat generation of battery discharging/charging includes a heat insulation component 10, a heavy object 12, a sealed space 13, a temperature measuring device 14, and a heat generation value calculating device 16. The insulation device 10 can include atop insulation element 101 and a bottom insulation element 102 to sandwich the battery C between the top insulation element 101 and the bottom insulation element 102. The heavy object 12 can press against the top insulation element 101, thereby causing the top and bottom insulation elements 101 and 102 to tightly contact each other, so as to enable the aforementioned heat insulation component 10 to more tightly enclose the battery C within it. Preferably, the heat insulation component 10 can be disposed within a sealed space 13, such as within a housing or a chamber, to block external influences on the heat insulation component 10 to further enhance the insulation effect of the present invention. In other embodiments, the heavy object 12 can be omitted. Instead, appropriate mechanisms can be designed on the top insulation element 101 and the bottom insulation element 102, such as securing the top and bottom insulation elements 101 and 102 with screws or using additional clamping mechanisms (not shown in the drawings), to achieve the same technical effect of tightly enclosing the battery C. Additionally, the top insulation element 101 and the bottom insulation element 102 are each made of thermal insulation material, which is a material with low thermal conductivity and excellent insulation properties, such as insulation cotton, polystyrene foam, polyurethane (PU), glass fiber, aerogel, or the combinations thereof. Therefore, the present invention establishes a heat-resistant environment by the heat insulation component 10, thereby reducing heat exchange between the battery C and the surrounding environment. Compared to the accelerating rate calorimeter, it does not require the heating furnace or the temperature control system in the present invention, and it means that the temperature gradient between the battery C and the surrounding environment is less than 0. As a result, the construction cost of the present invention is significantly low. When combined with the heat generation value calculating device 16 and fitting a temperature curve, the result obtained are very similar to that obtained by placing the battery C in an expensive accelerating rate calorimeter. Therefore, the present invention has practical value as a design reference. The following paragraphs will provide further details. Additionally, the heat insulation component 10 can be a single component with an accommodating space to accommodate the battery C, and it can be optionally pressed by the heavy object 12 to more tightly enclose and contact the battery C to enhance insulation effectiveness. The temperature measuring device 14 includes at least one temperature measuring element 140 attached to the surface of the battery C, and a temperature sensor 142 connected to the at least one temperature measuring element 140 to measure the surface temperature of the battery C via the temperature measuring element 140. The temperature sensor 142 can set a measurement sampling frequency, such as once per second, or set the measurement accuracy as required. In the present embodiment, the temperature measuring element 140 may be a thermistor or a thermocouple, and the temperature measuring device 14 has six temperature measuring elements 140, which are distributed at the front, middle, and rear positions above and below the battery C, resulting in six measurement points. However, the number of the measurement points may not be limited to six in other embodiments. Additionally, the six temperature measuring elements of the temperature measuring device 14 are located at different locations along the centerline of the surface of the battery C. The temperatures measured at these locations may vary slightly. The temperature sensor 142 averages the temperatures measured by all temperature measuring elements 140 at the same time to determine the surface temperature of the battery C, thereby providing a more precise and objective temperature data representing the heating condition of the battery C. Furthermore, the heat generation value calculating device 16 is connected to the temperature sensor 142 to continuously receive the surface temperature of the battery C and record the surface temperature of battery C to form a measured temperature curve. Furthermore, the heat generation value calculating device 16 can be independently configured outside the sealed space 13 to avoid affecting the measurement of the temperature of the battery C during discharging/charging. The heat generation value calculating device 16 can be used to calculate the temperature changes of the battery C during discharging/charging in a nearly adiabatic environment, thereby calculating the heat generation value. The calculation steps are described in detail as shown in FIG. 2. In this embodiment, specifically, the top insulation element 101 and bottom insulation element 102 of the heat insulation component 10 can be, but not limited to, top insulation cotton and bottom insulation cotton with a thickness of 40 mm respectively. Any material capable of enclosing the battery C and providing heat insulation functionality can be adopted as the heat insulation component of the present invention. The heat generation value calculating device 16 can be any device with computational and data storage functions, such as a desktop computer, laptop computer, server, or cloud server.

As shown in FIG. 2, the method for calculating heat generation of battery discharging/charging includes the following steps: step S20, configuring the battery C in the heat insulation component; step S22, discharging/charging battery C, allowing a battery temperature of the battery C to equilibrate to a first temperature after discharging/charging the battery C, wherein the first temperature can be, for example, the room temperature or an initial temperature when the battery C starts discharging/charging, and measuring the temperature of the battery C during discharging/charging and cooling to the first temperature by the temperature measuring device 14 to obtain a measured temperature curve; step S24: according to a cooling phase of the measured temperature curve, curve fitting an Nth-degree curve fitting equation of the temperature-time gradient with respect to temperature, where N is an integer greater than or equal to 1; step S26: substituting a plurality of temperatures of the measured temperature curve into the Nth-degree curve fitting equation to obtain a plurality of temperature compensation values, and generating a compensated temperature curve according to the temperatures and temperature compensation values; and, step S28: calculating the heat generation value of the battery during discharging/charging according to the compensated temperature curve and a battery thermal conversion model.

In the present embodiment, the heat insulation component in step S20 can include the top insulation element 101, the bottom insulation element 102, the heavy object 12, and the sealed space 13 as shown in FIG. 1. For the battery C, the aforementioned top insulation element 101, bottom insulation element 102, heavy object 12, and sealed space 13 form a surrounding environment, and the strict adiabatic conditions of this surrounding environment are not required. It can be placed in a ground-level atmospheric pressure environment. More importantly, the temperature gradient between the battery C and the surrounding environment can be less than 0. Therefore, compared to the conventional method of using the expensive accelerating rate calorimeter, the present invention achieves its objective in a simple and extremely low-cost manner for the method for calculating heat generation of battery discharging/charging can be performed under the conditions where the temperature gradient between the battery C and the surrounding environment is less than 0 and in the atmospheric pressure environment. In step S22, the battery C is discharged/charged at a constant current, where the constant current can be 1C or 2C, etc., with C representing the nominal capacity of the battery. The temperature measuring device 14 continuously measures the temperature of the battery C during discharging/charging and transmits it to the heat generation value calculating device 16, which records the temperatures measured at different times and forms the measured temperature curve. It should be noted that the temperature measuring device 14 can not only measure the temperature of the battery C during discharging/charging but also continue to measure the temperature of the battery C after discharging/charging. The heat generation value calculating device 16 can also continuously record the battery temperature after discharging/charging and form the measured temperature curve. Theoretically, when the battery is in a completely adiabatic environment, the temperature of the battery will remain constant after discharging/charging. However, in practice, it is impossible to create a completely adiabatic environment, and the battery will dissipate heat due to various heat exchanges after discharging/charging, causing the actual measured temperature curve to continuously decrease.

In step S24, the heat generation value calculating device 16 can use the linear regression method to fit the Nth-degree curve fitting equation to the measured temperature curve after discharging/charging until cooling to the ambient temperature. The linear regression method can be the least squares method. In practice, the value of N can be determined according to requirements. For example, in general cases, N can be set to 2, meaning the fitted equation is a quadratic fitting equation. As N increases, the error between the temperature curve fitted by the present invention and the temperature curve of the battery discharging/charging in a completely adiabatic environment or a nearly adiabatic environment becomes smaller.

In step S26, the heat generation value calculating device 16 substitutes the temperature of the measured temperature curve into the Nth-degree curve fitting equation to obtain the corresponding temperature compensation value. By adding the temperature compensation value to the temperature at each time point, the compensated temperature is obtained. A compensated temperature curve is then generated according to these compensated temperatures. The compensated temperature curve will closely approximate the temperature curve of the battery C during discharging/charging and after discharging/charging in a completely adiabatic environment. Therefore, in step S28, the heat generation value calculating device 16 can directly calculate the heat generation value of the battery C during discharging/charging according to the compensated temperature curve and a battery thermal conversion model.

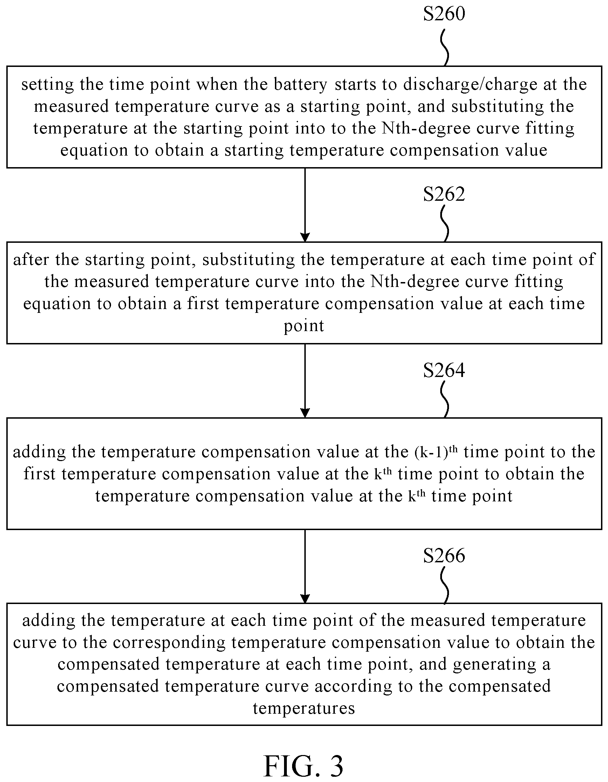

The method for compensating the actual measured temperature to obtain the compensated temperature curve in step S26 can be referenced in FIG. 3, which is a flowchart illustrating the method for calculating heat generation of battery discharging/charging according to another embodiment of the present invention. It should be noted that the steps shown in FIG. 3 are executed after step S24 in the previous embodiment and continue with step S28. For simplicity, FIG. 3 only shows the steps different from those in the previous embodiment, while the corresponding steps (steps S20 to S24 and step S28) are the same as those in the previous embodiment and are therefore not repeated here. As shown in FIG. 3, the method for calculating heat generation of battery discharging/charging of the present embodiment further includes step S260: setting the time point when the battery C starts to discharge/charge at the measured temperature curve as a starting point, and substituting the temperature at the starting point into to the Nth-degree curve fitting equation to obtain a starting temperature compensation value; step S262, after the starting point, substituting the temperature at each time point of the measured temperature curve into the Nth-degree curve fitting equation to obtain a first temperature compensation value at each time point; step S264, adding the temperature compensation value at the $(k-1)^{th}$ time point to the first temperature compensation value at the $k^{th}$ time point to obtain the temperature compensation value at the $k^{th}$ time point, where k is an integer greater than or equal to 1; and, step S266: adding the temperature at each time point of the measured temperature curve to the corresponding temperature compensation value to obtain the compensated temperature at each time point, and generating a compensated temperature curve according to the compensated temperatures. Steps S260 to S266 can also be performed by the heat generation value calculating device 16 as shown in FIG. 1.

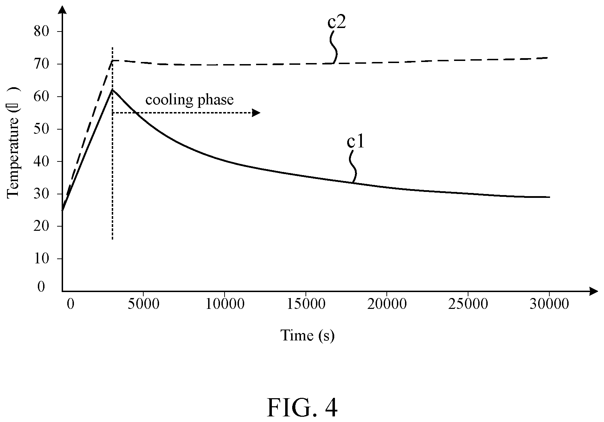

In step S260, the starting point of the measured temperature curve is the time point when the battery starts to discharge/charge. The heat generation value calculating device 16 directly substitutes the temperature at the starting point into the Nth-degree curve fitting equation to obtain a starting temperature compensation value, which can be directly added to the temperature at the starting point of the measured temperature curve to obtain the compensated temperature at the starting point. Additionally, from steps S262 to S264, it can be seen that the temperature compensation value at each time point after the starting point is the temperature compensation value (i.e., the first temperature compensation value) calculated by substituting the temperature at that time point into the Nth-degree curve fitting equation, plus the temperature compensation value at the previous time point. After calculating the temperature compensation value for each time point, in step S266, the heat generation value calculating device 16 can add the temperature measured at each time point (the temperature on the measured temperature curve) to its corresponding temperature compensation value, thereby obtaining the compensated temperature for each time point and generating a compensated temperature curve. As aforementioned, the measured temperature curve will continue to decrease after the battery C discharges/charges. However, the compensated temperature curve generated by the above Nth-degree curve fitting equation maintains approximately the same temperature after the battery C has finished discharging/charging. Under this condition, the compensated temperature curve obtained by the method for calculating heat generation of battery discharging/charging of the present invention is substantially consistent with the temperature curve of the battery C discharging/charging in the nearly adiabatic environment. Please refer to FIG. 4, which is a schematic diagram illustrating the measured temperature curve and the compensated temperature curve obtained by the system and method for calculating heat generation of battery discharging/charging according to an embodiment of the present invention. It should be noted that the curves obtained in the embodiment of FIG. 4 are obtained by the system and method for calculating heat generation of battery discharging/charging described in the aforementioned embodiments measuring the battery discharging/charging temperature and performing compensation, and the discharge is taken as the example here. The hardware architecture and the steps of the method are the same as those described in the aforementioned embodiment and are not repeated here. As shown in FIG. 4, the measured temperature curve c1 obtained by the aforementioned heat insulation component and temperature measuring device indicates that the battery temperature continues to decrease after discharging, i.e., the cooling phase in FIG. 4. It indicates that the heat insulation component has partial heat loss compared to the completely adiabatic environment. In contrast, the compensated temperature curve c2, after compensation, maintains approximately the same battery temperature after discharging. It indicates that the compensated temperature curve c2 is approximately equivalent to the temperature curve of the battery during and after discharging in the nearly adiabatic environment (it will be described in more detail later).

The aforementioned Nth-degree curve fitting equation can be expressed as

$$\frac{dT_{cell}}{dt}(T) = \sum_{m=0}^{N} a_m T^m$$

, wherein T is the battery temperature, t is time, and $\sum_{m=0}^{N} a_m$ is the coefficient obtained through linear regression in the Nth-degree curve fitting equation. Linear regression can be performed by various methods, the least squares method is used here. As aforementioned, N can be determined according to requirements and is not limited to a certain value. For illustrative purposes, the aforementioned Nth-degree curve fitting equation is exemplified here by a quadratic fitting equation (i.e., N = 2), which is given by:

$$\frac{dT_{cell}}{dt}(T_k) = a_2 T_k^2 + a_1 T_k + a_0$$

, wherein $T_k$ is the temperature of the measured temperature curve c1 at the $k^{th}$ time point, and $a_2$, $a_1$, and $a_0$ are the coefficients obtained by curve fitting the cooling phase of the measured temperature curve c1 by linear regression or other methods. The temperature compensation value $T_0'$ at the starting point when the battery C starts discharging/charging is set as $T_0' = \frac{dT_{cell}}{dt}(T_0)$. Since the battery C is enclosed within the heat insulation component, which has a certain thermal insulation effect, the battery C continues to dissipate a small amount of heat. Therefore, the temperature compensation value at each time point after the starting point can be set as the first temperature compensation value obtained by substituting the temperature at that time point into the quadratic fitting equation, plus the temperature compensation value at the previous time point. That is, the formula for the temperature compensation value $T_k'$ at each time point after the starting point is: $T_k' = T_{k-1}' - \frac{dT_{cell}}{dt}(T_k)$, wherein $\frac{dT_{cell}}{dt}(T_k)$ is the first temperature compensation value obtained by the temperature of the measured temperature curve c1 at the $k^{th}$ time point substituted into the quadratic fitting equation. Since $\frac{dT_{cell}}{dt}(T_k)$ is negative during the cooling phase, a minus sign is added to the temperature compensation formula $T_k'$ to ensure that the temperature compensation remains positive. Finally, by adding the corresponding temperature compensation value $T_k'$ to the temperature $T_k$ of the measured temperature curve c1 at each time point, the compensated temperature at each time point can be obtained, thereby forming the compensated temperature curve c2.

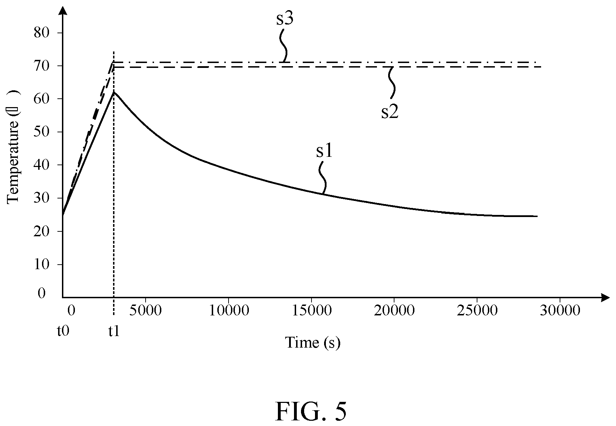

Please refer to FIG. 5, which takes the discharge as an example. FIG. 5 is a schematic diagram illustrating the simulated temperature curve of battery discharging by the system and method for calculating heat generation of battery discharging/charging and the simulated temperature curve of the battery discharging in the completely adiabatic environment according to an embodiment of the present invention. In the present embodiment, the simulation is presented by the simulation software. The simulation experimental condition of the aforementioned system and method for calculating heat generation of battery discharging/charging is a heat convection coefficient h = 0~10 W/m2-K. Take h = 3 as the example here. The measured temperature curve of the battery discharging simulated by the system of the present invention is shown as a curve s1 in FIG. 5. The compensated temperature curve calculated by the method of the present invention according to the measured temperature curve s1 is shown as a curve s2 in FIG. 5. The temperature of the curve s2 is almost the same as the temperature curve s3 simulated under the completely adiabatic condition during the temperature rise phase (i.e., the time interval from t0 to t1 in FIG. 5), and the curve s2 also maintains the same temperature without decreasing after the battery discharging (i.e., after the t1 time point in FIG. 5).It indicates that the compensated temperature curve s2 is substantially close to the temperature curve s3 simulated during and after the battery discharging in a completely adiabatic environment. Additionally, the temperature difference between the compensated temperature curve s2 of the present invention and the temperature curve s3 simulated under the completely adiabatic condition is at most 1.06°C, which is extremely close to temperature curve s3. This indicates that the temperatures of battery discharging/charging obtained by the system and method of the present invention are very close to those in the completely adiabatic environment.

As mentioned above, since the compensated temperature curve s2 of the present invention is substantially consistent with the temperature curve of the battery C during discharging/charging in the completely adiabatic environment, it indicates that the temperatures on the compensated temperature curve s2 have generally eliminated the heat exchange effects of heat conduction, convection and radiation. Therefore, substituting the temperatures into the battery thermal conversion model under the completely adiabatic environment allows the heat generation value of the battery during discharging/-charging to be directly calculated. Specifically, the formula for the battery thermal conversion model under the adiabatic environment is: $mC_p \frac{dT_{cell}}{dt} = Q$, wherein m is the mass of the battery, $C_p$ is the specific heat capacity of the battery, $T_{cell}$ is the battery temperature, and Q is the heat generation value. Therefore, by substituting the temperatures within the discharging/charging phase of the compensated temperature curve into the $T_{cell}$ variable of the aforementioned battery thermal conversion model formula, the heat generation value Q of the battery C can be calculated. Similarly, the same battery thermal conversion model formula: $mC_p \frac{dT_{cell}}{dt} = Q$ can be applied to the compensated temperature curve c2 in FIG. 4 to obtain the heat generation value Q of the battery.

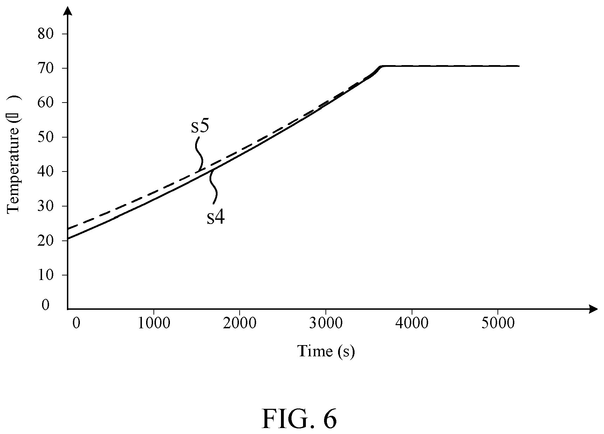

Additionally, in the prior art, when the battery C is placed in the sample chamber of an accelerating rate calorimeter (ARC), a plurality of temperature measuring elements can also be configured on the battery C. These temperature measuring elements are located at the same positions on the battery C where the corresponding measurement points of the temperature measuring elements 140 described in the previous embodiments are located. The temperature measuring elements can be used to measure the temperature of the battery during charging/discharging in the sample chamber of the accelerated calorimeter. As aforementioned, in the prior art, measurements are taken by the accelerating rate calorimeter (ARC), wherein the heat source is continuously controlled within the accelerating rate calorimeter to prevent the temperature gradient between the environment of the sample chamber and the battery, so as to ensure that the sample chamber and battery C heat up synchronously, thereby establishing an environment approximating complete thermal insulation. Please refer to FIG. 6, which takes the discharge as an example. FIG. 6 is a schematic diagram illustrating the compensated temperature curve obtained by the system and method for calculating the heat generation of battery discharging/charging according to an embodiment of the present invention, and the temperature curve obtained by measuring the heat generation value of discharging of the battery in the accelerating rate calorimeteror battery thermal runaway test in the prior art. As shown in FIG. 6, during the temperature rise phase of the battery discharging process, the compensated temperature curve s4 of the system and method of the present invention is very close to the temperature curve s5 of the battery during discharging in the accelerating rate calorimeter. Specifically, the temperature difference in the temperature rise phase of the present invention is only 2.6°C higher than that of the battery in the accelerating rate calorimeter for battery thermal runaway test (temperature difference of temperature curve s4: 69.9°C - 21.4°C = 48.5°C; temperature difference of temperature curve s5: 69.8°C - 23.9°C = 45.9°C), and the temperatures after battery discharging of the two curves are almost the same. Therefore, the temperature curve obtained by the system and method of the present invention are highly similar to the measured temperature curve of the battery in the accelerating rate calorimeter, and the cost of the system and method of the present invention is significantly lower than that of establishing a nearly adiabatic environment by the accelerating rate calorimeter.

As mentioned above, the accelerating rate calorimeter for battery thermal runaway testing (EV+ARC) can be used to establish a nearly adiabatic environment. The temperature difference of the compensated temperature curve s4 obtained in the present invention during battery discharging is only 2.6°C higher than the temperature difference of the temperature curve s5 obtained when the battery is discharged in the sample chamber of the accelerating rate calorimeter. Therefore, in FIG. 4, the compensated temperature curve c2 of the present invention can be regarded as the temperature curve of the battery during and after discharging in the nearly adiabatic environment. According to the temperature rise phase (discharging duration) of the compensated temperature curve c2, the aforementioned battery thermal conversion model formula:

$$mC_p \frac{d\mathrm{T_{cell}}}{d\mathrm{t}} = Q$$

can be directly applied, i.e., the battery mass multiplied by the battery specific heat capacity multiplied by the first derivative of the temperature rise phase of the compensated temperature curve c2 with respect to time, thereby calculating the heat generation Q (watts) during battery discharging.

In summary, the system and method for calculating heat generation of battery discharging/charging of the present invention encloses the battery with insulation materials such as insulation cotton to ensure contact, performs constant-current discharging/charging of the battery, allows the battery to cool to the room temperature, measures the surface temperature of the battery, forms a measured temperature curve according to the measured surface temperatures, fits the cooling phase of the measured temperature curve to generate an Nth-degree curve fitting equation, compensates the temperatures on the measured temperature curve by the Nth-degree curve fitting equation to generate a compensated temperature curve, and calculates the heat generation value of the battery discharging/charging according to the compensated temperature curve. The compensated temperature curve obtained by compensating with the Nth-degree curve fitting equation is close to the temperature curve formed during the battery discharging/charging in the completely adiabatic environment. Therefore, the heat generation value during battery discharging/charging can be easily and accurately calculated according to the compensated temperature curve without considering heat exchanges such as heat conduction, convection, or radiation. Additionally, the heat insulation component in the system and method of the present invention is merely for enclosing the battery. Optionally, a weight can be added to the heat insulation component, and a sealed space can be formed. The heat insulation component components can be made of low-cost insulation material such as insulation cotton. Compared to the prior art using expensive accelerating rate calorimeter to create the nearly adiabatic environment, the present invention achieves a significant reduction in costs.

With the examples and explanations mentioned above, the features and spirits of the invention are hopefully well described. More importantly, the present invention is not limited to the embodiment described herein. Those skilled in the art will readily observe that numerous modifications and alterations of the device may be made while retaining the teachings of the invention. Accordingly, the above disclosure should be construed as limited only by the metes and bounds of the appended claims.

## Claims

1.  A method for calculating heat generation of battery discharging/charging, comprising the following steps of:

    configuring a battery in a heat insulation component;
    discharging/charging the battery, allowing a battery temperature of the battery to equilibrate to a first temperature after discharging/charging the battery, and measuring the battery temperature of the battery during the discharging/charging and the equilibrating to obtain a measured temperature curve;
    obtaining an Nth-degree curve fitting equation of the temperature-time gradient with respect to temperature by curve fitting a cooling phase of the measured temperature curve, wherein N is an integer greater or equal to 1;

substituting a plurality of temperatures of the measured temperature curve into the Nth-degree curve fitting equation to obtain a plurality of temperature compensation values, and forming a compensated temperature curve according to the temperatures and the corresponding temperature compensation values; and

calculating a heat generation value of the discharging/charging of the battery according to the compensated temperature curve and a battery thermal conversion model.

2. The method of claim 1, further comprising the following steps of:

setting the time point when the battery starts to discharge/charge at the measured temperature curve as a starting point, and substituting the temperature at the starting point into the Nth-degree curve fitting equation to obtain a starting temperature compensation value;

substituting the temperature at each time point after the starting point of the measured temperature curve into the Nth-degree curve fitting equation to obtain a first temperature compensation value at each time point;

adding the temperature compensation value at the $(k-1)^{th}$ time point to the first temperature compensation value at the $k^{th}$ time point to obtain the temperature compensation value corresponding to the $k^{th}$ time point, wherein k is an integer greater or equal to 1; and

adding the temperature at each time point of the measured temperature curve to the corresponding temperature compensation value to obtain a compensated temperature at each time point, and generating the compensated temperature curve according to the compensated temperatures.

3. The method of claim 1, wherein the battery is discharged/charged at a constant current.

4. The method of claim 1, wherein the step of configuring the battery in the heat insulation component comprises the following steps of:

configuring at least one temperature measuring elements on the surface of the battery;

enclosing the battery with the heat insulation component;

placing a heavy object on the heat insulation component; and

placing the heat insulation component in an sealed space.

5. The method of claim 1, wherein the step of calculating the heat generation value of the discharging/-

charging of the battery according to the compensated temperature curve and the battery thermal conversion model obtains the heat generation value by multiplying the gradient of the compensated temperature curve of the discharging/charging of the battery by the mass and the specific heat capacity of the battery.

6. A system for calculating heat generation of battery discharging/charging, configured to calculating a heat generation value during the discharging/charging of a battery, the system comprising:

a heat insulation component, enclosing the battery and contacting a top surface and a bottom surface of the battery;

a heavy object, pressing against the heat insulation component;

a temperature measuring device, comprising:

at least one temperature measuring elements, attached on a surface of the battery; and

a temperature sensor, connected to the at least one temperature elements, the temperature sensor being configured to measure a surface temperature of the battery via the at least one temperature elements; and

a heat generation value calculating device, connected to the temperature measuring device to receive the surface temperature of the battery measured by the temperature sensor, the heat generation value calculating device being configured to form a measured temperature curve according to the received surface temperature of the battery, obtain an Nth-degree curve fitting equation of the temperature-time gradient with respect to temperature by curve fitting a cooling phase of the measured temperature curve, substitute a plurality of temperatures of the measured temperature curve into the Nth-degree curve fitting equation to obtain a plurality of temperature compensation values, form a compensated temperature curve according to the temperatures and the corresponding temperature compensation values, and calculating a heat generation value of the discharging/charging of the battery according to the compensated temperature curve and a battery thermal conversion model, wherein N is an integer greater or equal to 1;

wherein, the temperature gradient between the battery and an surrounding environment is less than 0, and the heat exchange occurs between the battery and the surrounding environment.

7. The system of claim 6, wherein the heat generation value calculating device is further configured to set the time point when the battery starts to discharge/-charge at the measured temperature curve as a starting point, substitute the temperature at the starting point into to the Nth-degree curve fitting equation to obtain a starting temperature compensation value, substitute the temperature at each time point after the starting point of the measured temperature curve to obtain a first temperature compensation value at each time point, add the temperature compensation value at the $(k-1)^{th}$ time point to the first temperature compensation value at the $k^{th}$ time point to obtain the temperature compensation value at the $k^{th}$ time point, add the temperature at each time point of the measured temperature curve to the corresponding temperature compensation value to obtain a compensated temperature at each time point, and generate a compensated temperature curve according to the compensated temperatures, wherein k is an integer greater or equal to 1.

8. The system of claim 6, wherein the temperature measuring elements of the temperature measuring device are configured at different part of the surface of the battery, the temperature sensor is configured to receive a plurality of measured temperatures from the temperature measuring elements at a time point, and the temperature measuring device obtain the surface temperature of the battery by averaging the measured temperatures.

9. The system of claim 6, wherein the temperature measuring elements are configured at a central line on the surface of the battery.

10. The system of claim 6, wherein the heat insulation component comprises a top insulation element and a bottom insulation element stacked on each other, the battery is sandwiched between the top insulation element and the bottom insulation element, the heavy object presses against the top insulation element to bring the top insulation element into close contact with the bottom insulation element to enclose the battery.

11. The system of claim 10, wherein the material of the top insulation element and the bottom insulation element of the heat insulation component is thermal insulation material.

FIG. 1

S20

configuring the battery in the heat insulation device

S22

discharging/charging battery, allowing a battery temperature of the battery to equilibrate to a first temperature, measuring the temperature of the battery during and after discharging/charging by the temperature measuring device to obtain a measured temperature curve

S24

according to a cooling phase of the measured temperature curve, curve fitting a Nth-degree curve fitting equation of the temperature-time gradient with respect to temperature

S26

substituting a plurality of temperatures of the measured temperature curve into the Nth-degree curve fitting equation to obtain a plurality of temperature compensation values, and generating a compensated temperature curve according to the temperatures and temperature compensation values

S28

calculating the heat generation value of the battery during discharging/ charging according to the compensated temperature curve and a battery thermal conversion model

FIG. 2

S260

setting the time point when the battery starts to discharge/charge at the measured temperature curve as a starting point, and substituting the temperature at the starting point into to the Nth-degree curve fitting equation to obtain a starting temperature compensation value

S262

after the starting point, substituting the temperature at each time point of the measured temperature curve into the Nth-degree curve fitting equation to obtain a first temperature compensation value at each time point

S264

adding the temperature compensation value at the $(k-1)^{th}$ time point to the first temperature compensation value at the $k^{th}$ time point to obtain the temperature compensation value at the $k^{th}$ time point

S266

adding the temperature at each time point of the measured temperature curve to the corresponding temperature compensation value to obtain the compensated temperature at each time point, and generating a compensated temperature curve according to the compensated temperatures

FIG. 3

FIG. 4

FIG. 5

FIG. 6

Europäisches
Patentamt
European
Patent Office
Office européen
des brevets

# EUROPEAN SEARCH REPORT

**Application Number**

EP 25 18 1045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 116 449 205 A (LIUZHOU PENGHUI ENERGY TECH CO LTD) 18 July 2023 (2023-07-18) * abstract; claims 1-4 * ----- | 1-11 | INV. H01M10/42 H01M10/48 |
| Y | WO 2020/199415 A1 (UNIV TSINGHUA [CN]) 8 October 2020 (2020-10-08) * abstract; claims 1,7,8 * ----- | 1-11 | |
| A | CN 117 031 319 A (LISHEN QINGDAO NEW ENERGY CO LTD) 10 November 2023 (2023-11-10) * the whole document * ----- | 1-11 | |

**TECHNICAL FIELDS SEARCHED (IPC)**

H01M

The present search report has been drawn up for all claims

| Place of search | Date of completion of the search | Examiner |
|---|---|---|
| Munich | 18 November 2025 | Topalov, Angel |

EPO FORM 1503 03.82 (P04C01)

## ANNEX TO THE EUROPEAN SEARCH REPORT
## ON EUROPEAN PATENT APPLICATION NO.

EP 25 18 1045

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2025

| Patent document cited in search report | | Publication date | Patent family member(s) | | Publication date |
|---|---|---|---|---|---|
| CN 116449205 | A | 18-07-2023 | NONE | | |
| WO 2020199415 | A1 | 08-10-2020 | CN | 110095722 A | 06-08-2019 |
| | | | WO | 2020199415 A1 | 08-10-2020 |
| CN 117031319 | A | 10-11-2023 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 113124940